# EUROPÄISCHE PATENTSCHRIFT

(11) **EP 3 888 981 B1**
(45) Veröffentlichungstag und Bekanntmachung des Hinweises auf die Patenterteilung: **31.08.2022**
(21) Anmeldenummer: 21164982.7
(22) Anmeldetag: 25.03.2021
(51) Int. Cl.: B60T 1/06, B60K 1/00, B60K 17/04, B60K 17/356, B60T 7/04, B60T 7/12

(54) **ACHSANTRIEB**
AXLE DRIVE
ENTRAÎNEMENT D'ESSIEU

(30) Priorität: 01.04.2020 DE 102020109097
(43) Veröffentlichungstag der Anmeldung: 06.10.2021
(73) Patentinhaber: Kessler & Co. GmbH & Co. KG, 73453 Abtsgmünd (DE)
(72) Erfinder: Bittlingmaier, Günter, 73432 Aalen-Ebnat (DE)
(74) Vertreter: Manitz Finsterwald Patent- und Rechtsanwaltspartnerschaft mbB

(56) Entgegenhaltungen:
- DE-A1-102006 027 901
- DE-A1-102011 018 861
- DE-A1-102017 110 941
- DE-A1-102017 110 942
- DE-A1-102018 211 555
- DE-U- 6 608 688

## Beschreibung

Die Erfindung betrifft einen Achsantrieb für ein Fahrzeug mit zumindest einer quer zu einer Längsrichtung des Fahrzeugs ausgerichteten antreibbaren Fahrzeugachse.

Ein Beispiel eines derartigen Achsantriebs ist aus der DE 10 2018 211 555 A1 bekannt.

Ein solcher Achsantrieb kann dazu vorgesehen sein, von einem Motor, insbesondere einem Elektromotor, generierte Antriebsleistung auf die Fahrzeugachse zu leiten, um die Fahrzeugachse anzutreiben und das Fahrzeug in Bewegung versetzen zu können. Dabei kann der Achsantrieb insbesondere an einer Unterseite des Fahrzeugs im Bereich der Fahrzeugachse angeordnet sein.

Neben dem Übertragen von Antriebsleistung kann es auch erforderlich sein, ein Fahrzeug mit einer Feststellbremsfunktion auszurüsten, um einen zuverlässigen Stillstand des Fahrzeugs gewährleisten und das Fahrzeug gegen ein Wegrollen sichern zu können. Insbesondere bei Nutzfahrzeugen, wie beispielsweise Lastkraftwagen, Flurförderfahrzeugen oder Muldenkippern, können Bremsen mit Feststellbremsfunktion dazu vorgesehen sein, die Fahrzeuge während eines Beladens sicher zu halten. Aufgrund der dabei auftretenden hohen Belastungen, insbesondere bei einem Beladen in verhältnismäßig steilem Gelände, muss eine solche Bremse eine entsprechend hohe Bremswirkung entfalten können. Daher ist es gerade bei den genannten Nutzfahrzeugen meist nicht möglich, die Feststellbremsfunktion über die Betriebsbremse zu realisieren, sondern es ist eine zusätzliche Bremse erforderlich.

Grundsätzlich ist es denkbar, eine Bremse an dem Achsantrieb des Fahrzeugs vorzusehen, um eine Rotation der Fahrzeugachse durch Blockieren des

Achsantriebs im Stillstand des Fahrzeugs zu verhindern. Insbesondere kann eine solche Bremse auch in Ergänzung zu den üblichen Betriebsbremsen des Fahrzeugs eine Notbremsfunktion erfüllen, beispielsweise wenn sie bei einem Abfall des Betriebsdrucks automatisch schließt. Hinsichtlich eines Einbaus einer Bremse an einem Achsantrieb besteht jedoch die Problematik, dass der Bauraum im Bereich der Fahrzeugachse äußerst beschränkt ist und häufig bereits zumindest zu einem Großteil von den Komponenten des Achsantriebs zur Übertragung der Antriebsleistung beansprucht wird. Insbesondere bei der Verwendung von Elektromotoren, die unmittelbar an dem Achsantrieb angeschlossen sein können und daher ebenfalls einen Teil des Bauraums in dem fraglichen Bereich beanspruchen, kann die Ausbildung des Achsantriebs mit einer Bremse erschwert sein.

Ferner können solche Bremsen häufig eine Bremsscheibe umfassen, die insbesondere bei der Verwendung für beladene oder zu beladende Nutzfahrzeuge einen verhältnismäßig großen Durchmesser aufweisen muss, um eine ausreichende Bremswirkung zum Halten des Fahrzeugs entfalten zu können. Gerade solche großen Bremsscheiben können jedoch in Anbetracht des beschränkten Bauraums einer Ausbildung des Achsantriebs mit einer Bremse entgegenstehen. Dennoch ist eine Feststellbremsfunktion für manche Anwendungen bzw. bei manchen Fahrzeugen unbedingt erforderlich.

Es ist daher eine Aufgabe der Erfindung, einen Achsantrieb mit einer Bremse, insbesondere zum Halten eines Fahrzeugs im Stillstand, zu schaffen, der eine möglichst kompakte Bauweise aufweist.

Diese Aufgabe wird gelöst durch einen Achsantrieb mit den Merkmalen des Anspruchs 1 und insbesondere dadurch, dass der Achsantrieb eine Antriebswelle umfasst, die sich entlang der Längsrichtung des Fahrzeugs ausgehend von einer ersten Seite des Achsantriebs über die Fahrzeugachse hinweg zu einer zweiten Seite des Achsantriebs erstreckt, wobei die Antriebswelle dazu ausgebildet ist, an einem Eingangsabschnitt Antriebsleistung von einem auf der ersten Seite des Achsantriebs angeordneten Elektromotor zu empfangen und die Antriebsleistung an der zweiten Seite des Achsantriebs über einen Ausgangsabschnitt auszugeben; dass der Achsantrieb eine Abtriebswelle umfasst, die sich auf der zweiten Seite des Achsantriebs versetzt zu der Antriebswelle parallel zu der Längsrichtung des Fahrzeugs zwischen einem ersten Ende und einem dazu entgegengesetzten zweiten Ende erstreckt, wobei das erste Ende der Abtriebswelle in Richtung der ersten Seite des Achsantriebs weist, und wobei die Abtriebswelle dazu ausgebildet ist, an einem Eingangsabschnitt Antriebsleistung von dem Ausgangsabschnitt der Antriebswelle zu empfangen und über ein an dem ersten Ende angeordnetes Kegelrad an die Fahrzeugachse auszugeben; und dass der Achsantrieb eine Bremse, insbesondere Feststellbremse, mit einer Bremsscheibe umfasst, welche achsparallel zu der Längsrichtung drehbar ist und welche auf der zweiten Seite des Achsantriebs von der ersten Seite des Achsantriebs wegweisend an der Antriebswelle oder an der Abtriebswelle angeordnet ist.

Indem sich die Antriebswelle und die Abtriebswelle entlang der Längsrichtung des Fahrzeugs erstrecken, kann zunächst auch die Ausdehnung des Achsantriebs auf diese Richtung konzentriert werden. Ferner kann der Elektromotor an der ersten Seite des Achsantriebs mit dem Achsantrieb verbunden werden bzw. sein, um Antriebsleistung auf den Eingangsabschnitt der Antriebswelle zu übertragen, während die Bremsscheibe auf der zweiten Seite des Achsantriebs und von der ersten Seite des Achsantriebs wegweisend angeordnet ist. Der Elektromotor und die Bremsscheibe sind somit auf einander entgegengesetzten Seiten des Achsantriebs angeordnet, so dass diese gewissermaßen als Zusatzkomponenten des Achsantriebs zu verstehenden Bauteile und der durch diese Bauteile beanspruchte Bauraum auf die beiden Seiten des Achsantriebs aufgeteilt werden können.

Die Bremse kann insbesondere als Feststellbremse fungieren und dazu vorgesehen sein, das Fahrzeug im Stillstand zuverlässig gegen ein Wegrollen zu sichern. Dazu kann die Bremse beispielsweise einen die Bremsscheibe umgreifenden Bremssattel aufweisen, welcher zu einem Halten der Bremsscheibe im Stillstand des Fahrzeugs ausgebildet sein kann, um eine Rotation der Bremsscheibe, der damit verbundenen Antriebswelle oder Abtriebswelle und somit auch der über das Kegelrad mit der jeweiligen Welle gekoppelten Fahrzeugachse zu blockieren. Insbesondere kann der Bremssattel dabei an einem bezüglich derjenigen der Antriebswelle und der Abtriebswelle, mit welcher die Bremsscheibe gekoppelt ist, radial äußeren Abschnitt der Bremsscheibe angreifen, um ein möglichst großes Bremsmoment aufbringen bzw. ein möglichst großes über die Fahrzeugachse auf die Antriebswelle geleitetes Drehmoment kompensieren zu können.

Alternativ oder zusätzlich zu einer solchen als Feststellbremse dienenden Bremse kann es auch vorgesehen sein, den Achsantrieb durch die Bremse mit einer Notbremsfunktion auszustatten. Beispielsweise kann ein Bremssattel während eines Fahrens mit dem Fahrzeug aktiv außer Eingriff mit der Bremsscheibe bringbar sein, um eine Rotation der Bremsscheibe zu ermöglichen, während der Bremssattel bei einem Ausbleiben der erforderlichen Aktion oder eines dazu notwendigen Signals automatisch in Eingriff mit der Bremsscheibe zum Bremsen des Fahrzeuges gelangen kann. Insbesondere kann der Bremssattel dazu einen während der Fahrt mit Druck beaufschlagbaren bzw. beaufschlagten Kolben umfassen, wobei der Bremssattel bei Ausbleiben des den Kolben beaufschlagenden Drucks automatisch in Eingriff zu der Bremsscheibe geraten kann. Dadurch können bei einem etwaigen Ausfall eines Fahrzeugsystems oder eines Energie zum Erzeugen des Drucks bereitstellenden Motors, beispielsweise des Elektromotors zum Antreiben der Fahrzeugachse, automatisch ein Eingriff des Bremssattels in die Bremsscheibe und ein daraus folgendes Bremsen des Fahrzeuges erreicht werden, so dass das Fahrzeug gegen solche Ausfälle zuverlässig gesichert und in Notsituationen schnell zum Stillstand gebracht werden kann. Auch eine solche als Notbremse vorgesehene Bremse kann grundsätzlich als Feststellbremse genutzt oder verstanden werden, indem die Aktion zum Lösen des Bremssattels insbesondere auch bewusst im Stillstand des Fahrzeuges unterbleiben kann, um das Fahrzeug gegen ein Wegrollen im Sinne einer Feststellbremse zu sichern.

Ferner können der Elektromotor und die Bremsscheibe, indem das erste Ende der Abtriebswelle mit dem daran angeordneten Kegelrad in Richtung der ersten Seite des Achsantriebs weist, im montierten Zustand des Achsantriebs auf verschiedenen Seiten der Fahrzeugachse positioniert werden. Der von diesen Komponenten beanspruchte Bauraum kann entsprechend auf die beiden Seiten der Fahrzeugachse, beispielsweise einen Bereich vor einer Vorderachse und einen Bereich zwischen einer Vorderachse und einer Hinterachse, aufgeteilt werden, so dass die Ausbildung des Achsantriebs mit einer Bremse unter Verwendung eines Elektromotors zum Generieren der Antriebsleistung nicht mit einer überproportionalen Erhöhung des beanspruchten Bauraums in einem der genannten Bereiche einhergeht.

Beispielsweise kann es erforderlich sein, den Raum zwischen zwei Fahrzeugachsen bei einem knickgelenkten Fahrzeug möglichst freizuhalten, um große Knickwinkel und das Durchfahren enger Kurven zu ermöglichen. Bei einem solchen Fahrzeug kann der Achsantrieb insbesondere derart moniert werden, dass lediglich eine in Längsrichtung schmal ausgebildete Bremsscheibe zwischen den Fahrzeugachsen angeordnet ist, die dem Erreichen großer Knickwinkel nicht entgegensteht. Der Elektromotor kann hingegen vor einer Vorderachse oder hinter einer Hinterachse, also nicht zwischen den Fahrzeugachsen, angeordnet sein, so dass der Elektromotor ein Verschwenken der Fahrzeugachsen gegeneinander nicht einschränkt. Durch die geschickte Aufteilung der Komponenten des Achsantriebs auf beide Seiten der Fahrzeugachsen kann somit erreicht werden, ein derartiges Fahrzeug mit einer Bremse mit zuverlässiger Feststellbremsfunktion auszurüsten, ohne dass die Anordnung des Achsantriebs mit einer Einschränkung der Bedienbarkeit des Fahrzeugs einhergeht.

Darüber hinaus können die Antriebswelle und die Abtriebswelle durch deren parallelen Versatz zueinander auf einfache Weise über eine Untersetzungsstufe miteinander gekoppelt sein, um eine Drehzahl der Antriebswelle untersetzt bzw. ins Langsame übersetzt von dem Ausgangsabschnitt der Antriebswelle auf den Eingangsabschnitt der Abtriebswelle zu übertragen. Insbesondere bei der Verwendung von kompakt bauenden und schnelldrehenden Elektromotoren zum Generieren der Antriebsleistung kann eine solche Untersetzungsstufe vorgesehen sein, um die von dem Elektromotor auf die Antriebswelle übertragene Drehzahl untersetzt auf die Fahrzeugachse leiten und dadurch beispielsweise die erforderlichen Drehmomente zum Antreiben eines beladenen Fahrzeugs erreichen zu können.

Die Antriebswelle kann sich insbesondere von einem ersten Ende zu einem zweiten Ende erstrecken, wobei der Eingangsabschnitt der Antriebswelle durch das erste Ende der Antriebswelle gebildet sein kann. Der Ausgangsabschnitt der Antriebswelle kann ferner insbesondere an deren zweitem Ende vorgesehen und entsprechend bezüglich der Längsrichtung des Fahrzeugs gerade entgegengesetzt zu dem Eingangsabschnitt angeordnet sein. Dabei kann der Eingangsabschnitt der Abtriebswelle entlang der Längsrichtung betrachtet zwischen dem ersten Ende und dem zweiten Ende der Abtriebswelle vorgesehen sein und die Abtriebswelle kann mit ihrem zweiten Ende über das zweite Ende der Antriebswelle hinausragen. Die Bremsscheibe kann bei einer solchen Anordnung mit dem zweiten Ende der Abtriebswelle drehfest und bremswirksam verbunden sein.

Ferner kann sich die Antriebswelle von einem ersten Ende zu einem zweiten Ende erstrecken, wobei der Eingangsabschnitt der Antriebswelle durch das erste Ende der Antriebswelle gebildet und die Bremsscheibe an dem zweiten Ende der Antriebswelle angeordnet sein kann. Der Ausgangsabschnitt der Antriebswelle kann folglich zwischen dem ersten Ende der Antriebswelle und dem zweiten Ende der Antriebswelle angeordnet sein. Der Eingangsabschnitt der Abtriebswelle kann dabei insbesondere von deren zweitem Ende gebildet sein, so dass sich die Abtriebswelle zwischen dem Eingangsabschnitt und dem Kegelrad erstrecken kann. Entsprechend kann die Antriebswelle mit dem zweiten Ende über das zweite Ende der Abtriebswelle hinausragen, um die Bremsscheibe dort anordnen zu können.

Indem der Ausgangsabschnitt der Antriebswelle an dem zweiten Ende der Antriebswelle oder der Eingangsabschnitt der Abtriebswelle an dem zweiten Ende der Abtriebswelle angeordnet sein kann, kann eine minimale Ausdehnung derjenigen der Antriebswelle und der Abtriebswelle erreicht werden, an welcher die Bremsscheibe nicht angeordnet ist. Lediglich diejenige der Antriebswelle und der Abtriebswelle, an welcher die Bremsscheibe angeordnet ist, kann sich geringfügig über das zweite Ende der jeweiligen anderen der Antriebswelle und der Abtriebswelle hinaus erstrecken, um die Bremsscheibe auf der zweiten Seite des Achsantriebs und dem Elektromotor entgegengesetzt anordnen zu können. Dadurch kann der Achsantrieb entlang der Längsrichtung des Fahrzeuges besonders kompakt ausgebildet sein. Die Bremsscheibe kann grundsätzlich drehfest und bremswirksam mit der Antriebswelle oder der Abtriebswelle verbunden sein.

Die Antriebswelle kann mehrteilig ausgebildet sein, beispielsweise um die über den Eingangsabschnitt empfangene Drehzahl des Elektromotors untersetzt bzw. ins Langsame übersetzt auf den Ausgangsabschnitt zu übertragen und über den Ausgangsabschnitt an die Abtriebswelle auszugeben. Dadurch können zum einen erhöhte Drehmomente auf die Abtriebswelle übertragen werden und kann zum anderen die von der Antriebswelle generierte Abwärme, insbesondere bei der Verwendung schnelldrehender Elektromotoren zum Generieren der Antriebsleistung, durch die verlangsamte Rotation zumindest eines Teils der Antriebswelle verringert werden. Ferner kann durch eine solche Untersetzung auch eine Rotation einer an einem zweiten Ende der Antriebswelle auf der zweiten Seite des Achsantriebs angeordneten Bremsscheibe im Betrieb verlangsamt werden, wodurch insbesondere zu Geräuschbildungen oder gegebenenfalls Beschädigungen des Achsantriebs führende Schwingungen der Bremsscheibe minimiert werden können.

Gleichermaßen kann es bei einer Anordnung der Bremsscheibe an der Abtriebswelle vorgesehen sein, die Antriebswelle und die Abtriebswelle über eine Untersetzungsstufe miteinander zu koppeln, um wiederum ein verbessertes akustisches Verhalten der Bremsscheibe und das Aufbringen größerer Drehmomente auf die Fahrzeugachse erreichen zu können. Zwar kann sich durch eine solche Untersetzung auch das aufzubringende Bremsmoment erhöhen, jedoch können durch das verbesserte akustische Verhalten der Bremsscheibe größere Bremsscheiben bzw. Bremsscheiben größeren Durchmessers eingesetzt werden, so dass die erforderlichen Bremsmomente problemlos aufgebracht werden können.

Das erste Ende und das zweite Ende der Abtriebswelle sind vorzugsweise zu gemeinsamer Drehung miteinander gekoppelt, so dass sie stets dieselbe Drehzahl aufweisen. Insbesondere kann die Abtriebswelle dazu einteilig ausgebildet sein.

Wenn die Bremsscheibe an der Abtriebswelle angeordnet ist, ist es ferner bevorzugt, dass die Bremsscheibe und das erste Ende der Abtriebswelle zu gemeinsamer Drehung miteinander gekoppelt sind. Insbesondere kann die Bremsscheibe dazu an einem Bremsabschnitt der Abtriebswelle befestigt sein, der mit dem ersten Ende der Abtriebswelle einteilig ausgebildet ist. Bei diesem Bremsabschnitt kann es sich insbesondere um das zweite Ende der Abtriebswelle handeln. Auf diese Weise kann bei einem Bremsen das an dem Kegelrad anliegende Drehmoment im Wesentlichen unmittelbar von der Bremsscheibe aufgenommen werden.

Weitere Ausführungsformen der Erfindung sind den abhängigen Ansprüchen, der Beschreibung und den Figuren zu entnehmen.

Bei einigen Ausführungsformen kann der Achsantrieb ferner den Elektromotor umfassen. Insbesondere kann die Antriebswelle dabei koaxial zu einem Abtrieb des Elektromotors angeordnet und dazu ausgebildet sein, von dem Elektromotor generierte Antriebsleistung an dem Eingangsabschnitt von dem Abtrieb des Elektromotors zu empfangen. Dabei kann der Eingangsabschnitt der Antriebswelle durch ein erstes, an der ersten Seite des Achsantriebs angeordnetes Ende der Antriebswelle gebildet und unmittelbar mit dem Abtrieb des Elektromotors gekoppelt sein. Dies kann es ermöglichen, den Achsantrieb mit einem von dem Achsantrieb umfassten und bereits montierten Elektromotor als kompakte und vormontierte Einheit mit der Fahrzeugachse zu verbinden, um die Montage erleichtern und beschleunigen zu können.

Der Ausgangsabschnitt der Antriebswelle und/oder der Eingangsabschnitt der Abtriebswelle kann/können bei einigen Ausführungsformen bezüglich der Längsrichtung zwischen dem ersten Ende der Abtriebswelle und der Bremsscheibe angeordnet sein. Dabei kann ein Antriebsleistungsfluss von dem Eingangsabschnitt der Antriebswelle zu dem Ausgangsabschnitt der Antriebswelle antiparallel zu einem Antriebsleistungsfluss von dem Eingangsabschnitt der Abtriebswelle zu dem ersten Ende der Abtriebswelle verlaufen. Entsprechend kann sich ein Antriebsleistungsfluss durch den Achsantrieb hindurch an dem Ausgangsabschnitt der Antriebswelle bzw. dessen Verbindung mit dem Eingangsabschnitt der Abtriebswelle umkehren. Insbesondere können der Ausgangsabschnitt der Antriebswelle und der Eingangsabschnitt der Abtriebswelle bezüglich der Längsrichtung dieselbe axiale Lage aufweisen. Beispielsweise können die Antriebswelle und die Abtriebswelle dazu über eine Stirnradstufe und somit über zumindest zwei, insbesondere genau zwei, in Eingriff zueinander stehende Zahnräder miteinander gekoppelt sein.

Insbesondere kann sich ein Antriebsleistungsfluss von dem Eingangsabschnitt der Antriebswelle durch den Achsantrieb hindurch zu dem ersten Ende der Abtriebswelle bzw. dem daran angeordneten Kegelrad zunächst entlang der Antriebswelle über die Fahrzeugachse hinaus erstrecken und durch die Abtriebswelle entgegen der Richtung des Antriebsleistungsflusses an der Antriebswelle zu der Fahrzeugachse zurück geführt werden. Dieses Leiten des Antriebsleistungsflusses ausgehend von dem Elektromotor über die Fahrzeugachse hinaus kann es insbesondere ermöglichen, die Bremsscheibe auf der bezüglich des Elektromotors entgegengesetzten Seite der Fahrzeugachse bremswirksam mit der Antriebswelle oder der Abtriebswelle zu verbinden und die Komponenten des Achsantriebs gleichmäßig auf die beiden Seiten der Fahrzeugachse aufzuteilen.

Ferner können der Ausgangsabschnitt der Antriebswelle und der Eingangsabschnitt der Abtriebswelle bei einigen Ausführungsformen derart antriebsmäßig miteinander gekoppelt sein, dass bei der Übertragung der Antriebsleistung von der Antriebswelle auf die Abtriebswelle eine Untersetzung erfolgt. Es kann somit vorgesehen sein, dass die Drehzahl der Antriebswelle ins Langsame übersetzt auf die Abtriebswelle übertragen wird. Insbesondere kann dadurch eine schnelle Rotation der Antriebswelle bei der Verwendung eines schnelldrehenden Elektromotors verlangsamt auf die Abtriebswelle und über diese bzw. das Kegelrad auf die Fahrzeugachse übertragen werden. Dadurch können die erforderlichen Drehmomente auch bei der Verwendung schnelldrehender und kompakt bauender Elektromotoren auf die Fahrzeugachse übertragen werden, so dass die Ausdehnung der Einheit aus dem Achsantrieb und dem Elektromotor minimiert werden kann. Darüber hinaus kann auch die Rotation einer an dem zweiten Ende der Abtriebswelle angeordneten Bremsscheibe entsprechend verlangsamt werden, um Schwingungen der Bremsscheibe und eine dadurch bedingte Geräuschbildung minimieren zu können.

Bei einigen Ausführungsformen können der Ausgangsabschnitt der Antriebswelle und der Eingangsabschnitt der Abtriebswelle über zumindest eine Stirnradstufe antriebsmäßig miteinander gekoppelt sein. Insbesondere kann es vorgesehen sein, dass der Ausgangsabschnitt der Antriebswelle und der Eingangsabschnitt der Abtriebswelle über genau eine Stirnradstufe antriebsmäßig miteinander gekoppelt sind. Dadurch kann eine einfache und zuverlässige Kopplung der Antriebswelle und der Abtriebswelle mit einer äußerst geringen Anzahl von Bauteilen erreicht werden, so dass die Ausdehnung und Komplexität des Achsantriebs sowie etwaige Leistungsverluste bei der Übertragung minimiert werden können. Insbesondere kann die Stirnradstufe dabei derart ausgebildet bzw. können Zahnräder der Stirnradstufe derart gewählt sein, dass an der Stirnradstufe eine Übersetzung der Drehzahl der Antriebswelle ins Langsame erfolgt.

Bei einigen Ausführungsformen kann die Bremsscheibe an dem zweiten Ende der Abtriebswelle angeordnet sein. Insbesondere kann es dabei vorgesehen sein, dass die Drehzahl der Antriebswelle an deren Ausgangsabschnitt ins Langsame übersetzt auf den Eingangsabschnitt der Abtriebswelle übertragen wird bzw. dass die Antriebswelle und die Abtriebswelle über eine Untersetzungsstufe, insbesondere eine Stirnradstufe, miteinander verbunden sind. Dadurch kann erreicht werden, dass die Abtriebswelle und damit auch die an dem zweiten Ende der Abtriebswelle angeordnete Bremsscheibe verlangsamt rotieren, was insbesondere das akustische Verhalten der Bremsscheibe verbessern und Schwingungen der Bremsscheibe während des Betriebs verringern kann.

Ferner kann das zweite Ende der Abtriebswelle bei solchen Ausführungsformen bezüglich der Längsrichtung des Fahrzeugs axial über die Antriebswelle hinausragen, wobei die Bremsscheibe sich radial zumindest bis in Flucht der Antriebswelle erstrecken kann. Die an dem zweiten Ende der Abtriebswelle angeordnete Bremsscheibe kann somit radial bezüglich der Abtriebswelle über den Versatz zwischen der Antriebswelle und der Abtriebswelle hinausragen, ohne durch die Antriebswelle blockiert bzw. im Durchmesser beschränkt zu sein. Der Radius der Bremsscheibe kann entsprechend größer als der Parallelversatz von der Antriebswelle und der Abtriebswelle sein. Das axiale Herausragen der Abtriebswelle über die Antriebswelle und insbesondere über ein zweites Ende der Antriebswelle hinaus kann es somit ermöglichen, bei kompakter Anordnung des Achsantriebs eine Bremsscheibe mit verhältnismäßig großem Durchmesser einzusetzen, um eine große Bremswirkung entfalten und beispielsweise zu beladende Nutzfahrzeuge zuverlässig im Stillstand gegen ein Wegrollen sichern zu können.

Bei einigen Ausführungsformen kann sich die Antriebswelle entlang der Längsrichtung des Fahrzeugs zwischen einem ersten Ende und einem dazu entgegengesetzten zweiten Ende erstrecken, wobei das erste Ende der Antriebswelle in Richtung der ersten Seite des Achsantriebs weisen kann und wobei die Bremsscheibe an dem zweiten Ende der Antriebswelle angeordnet sein kann. Der Elektromotor, die Antriebswelle und die Bremsscheibe können dabei insbesondere koaxial zueinander angeordnet sein. Ferner kann sich die Antriebswelle mit dem zweiten Ende über das zweite Ende der Abtriebswelle hinaus erstrecken, so dass sich die Bremsscheibe zumindest bis in Flucht zu der Abtriebswelle erstrecken kann. Auch durch dieses axiale Überragen der Abtriebswelle kann die an dem zweiten Ende der Antriebswelle angeordnete Bremsscheibe mit einem verhältnismäßig und insbesondere den Versatz zwischen der Antriebswelle und der Abtriebswelle übersteigenden Radius ausgebildet sein, um eine ausreichend hohe Bremskraft entfalten zu können. Die Antriebswelle kann sich insbesondere nach Art einer Durchtriebswelle durch ein Gehäuse des Achsantriebs hindurch erstrecken, wobei die Bremsscheibe außerhalb des Gehäuses mit dem zweiten Ende der Antriebswelle verbunden sein kann.

Auch wenn die Bremsscheibe als an dem zweiten Ende der Antriebswelle angeordnet beschrieben ist, kann es vorgesehen sein, dass sich die Antriebswelle über die Bremsscheibe hinaus erstreckt, um beispielsweise einen Teil der von dem Elektromotor generierten Antriebsleistung an eine weitere antreibbare Fahrzeugachse zu übertragen. In solchen Fällen markiert die Bremsscheibe folglich ein zweites Ende der Antriebswelle bezüglich des Achsantriebs zum Antreiben der Fahrzeugachse, so dass die Komponenten zum Antreiben dieser Fahrzeugachse sämtlich zwischen dem Elektromotor und der Bremsscheibe angeordnet sind, während der sich über die Bremsscheibe hinaus erstreckende Teil der Antriebswelle und eventuell daran angeordnete oder damit verbundene Komponenten zum Antreiben einer weiteren Fahrzeugachse vorgesehen sein können. Dabei kann die sich über die Bremsscheibe hinaus erstreckende Antriebswelle insbesondere mehrteilig, aber auch einteilig ausgebildet sein.

Bei einigen Ausführungsformen kann die Antriebswelle zumindest eine erste Teilwelle und eine dazu koaxiale zweite Teilwelle umfassen, die über ein dazwischen angeordnetes Untersetzungsgetriebe antriebswirksam gekoppelt sind. Insbesondere kann dies vorgesehen sein, wenn die Bremsscheibe mit einem zweiten Ende der Antriebswelle, welches insbesondere an der zweiten Teilwelle angeordnet sein kann, verbunden ist, um die Rotation der Bremsscheibe im Betrieb verlangsamen zu können.

Bei einer solchen mehrteiligen Ausbildung der Antriebswelle kann insbesondere die erste Teilwelle den Eingangsabschnitt der Antriebswelle aufweisen, auf welchen Antriebsleistung von dem Elektromotor übertragen wird. Die zweite Teilwelle kann hingegen den Ausgangsabschnitt der Antriebswelle aufweisen, so dass bereits eine untersetzte Drehzahl an dem Ausgangsabschnitt auf den Eingangsabschnitt der Abtriebswelle übertragen werden kann. Das Untersetzungsgetriebe kann folglich eine Drehzahl der ersten Teilwelle ins Langsame übersetzt auf die zweite Teilwelle übertragen. Zusätzlich zu dieser Untersetzung durch das Untersetzungsgetriebe kann es vorgesehen sein, dass die Drehzahl der zweiten Teilwelle an dem Ausgangsabschnitt der Antriebswelle abermals untersetzt auf den Eingangsabschnitt der Abtriebswelle übertragen wird, wozu beispielsweise eine Kopplung der Antriebswelle und der Abtriebswelle über eine Stirnradstufe vorgesehen sein kann. Beispielsweise kann das Untersetzungsgetriebe als Planetengetriebe ausgebildet sein.

Ferner kann das Untersetzungsgetriebe bei einigen Ausführungsformen schaltbar ausgebildet sein, um zwischen verschiedenen Übersetzungsstufen bezüglich der Übertragung der Drehzahl von der ersten Teilwelle auf die zweite Teilwelle wählen zu können. Insbesondere kann es dabei auch vorgesehen sein, dass bei einer der Übersetzungsstufen die Drehzahl der ersten Teilwelle unverändert auf die zweite Teilwelle übertragen wird, während bei zumindest einer der Übersetzungsstufen eine Übersetzung ins Langsame bzw. eine Untersetzung erfolgt. Insbesondere kann dadurch das auf die Abtriebswelle und über die Abtriebswelle auf die Fahrzeugachse übertragbare Drehmoment situationsbedingt anpassbar sein.

Beispielsweise kann ein solches schaltbares Untersetzungsgetriebe als Planetengetriebe mit festgehaltenem Hohlrad ausgebildet sein, wobei die zweite Teilwelle mit einem Steg, auf welchem Achsen ein Sonnenrad umlaufender Planetenräder angeordnet sind, drehfest gekoppelt sein kann. Die erste Teilwelle kann dabei wahlweise, beispielsweise mittels einer Klauenkupplung, mit dem Steg oder mit dem Sonnenrad verbindbar sein, um die Rotation der ersten Teilwelle entweder unverändert oder ins Langsame übersetzt bzw. untersetzt auf die zweite Teilwelle übertragen zu können. Alternativ dazu kann das Untersetzungsgetriebe als Planetengetriebe mit festgehaltenem Steg ausgebildet und die zweite Teilwelle mit dem Hohlrad verbunden sein, während die erste Teilwelle wahlweise mit dem Hohlrad oder mit dem Sonnenrad verbindbar sein kann. Es ist auch möglich, mehrerer solcher Untersetzungsgetriebe hintereinander zu schalten, um die Drehzahl der ersten Teilwelle, insbesondere wahlweise, untersetzt auf die zweite Teilwelle übertragen zu können.

Der Achsantrieb kann bei einigen Ausführungsformen dazu ausgebildet sein, derart in dem Fahrzeug montiert zu werden, dass die Antriebswelle vertikal versetzt zu der Abtriebswelle, insbesondere oberhalb der Abtriebswelle, angeordnet ist und die Fahrzeugachse überquert.

Insbesondere kann ein solcher Einbau eine kompakte Anordnung des Achsantriebs ermöglichen, wobei ein Antriebsleistungsfluss zunächst über die Fahrzeugachse hinausgeführt und dann über die Abtriebswelle zurück zu der Fahrzeugachse geleitet wird. Somit können der Elektromotor und die Bremsscheibe auf einander entgegengesetzten Seiten der Fahrzeugachse angeordnet werden. Ferner können der insbesondere koaxial zu der Antriebswelle angeordnete Elektromotor sowie die Antriebswelle selbst durch deren Überqueren der Fahrzeugachse mit einem besonders großen Abstand zum Boden angeordnet werden, um eine ausreichende Bodenfreiheit zu gewährleisten und die genannten Komponenten vor Beschädigungen während einer Fahrt mit dem Fahrzeug möglichst gut zu schützen.

Bei einigen Ausführungsformen kann der Achsantrieb ein Gehäuse umfassen, in dem die Antriebswelle und die Abtriebswelle zumindest teilweise aufgenommen sein können, wobei vorzugsweise zumindest der Ausgangsabschnitt der Antriebswelle und der Eingangsabschnitt der Abtriebswelle innerhalb des Gehäuses angeordnet sind. Insbesondere kann die Antriebswelle dabei vollständig innerhalb des Gehäuses angeordnet sein oder sich allenfalls mit einem ersten Ende bzw. dem Eingangsabschnitt zum Koppeln mit einem Abtrieb des Elektromotors aus dem Gehäuse heraus erstrecken. Dabei kann die Bremsscheibe mit dem zweiten Ende der Abtriebswelle verbunden sein, wobei sich die Abtriebswelle mit dem zweiten Ende aus dem Gehäuse heraus erstrecken kann, so dass die Bremsscheibe außerhalb des Gehäuses angeordnet und dort insbesondere trocken umlaufen kann. Ebenfalls kann, insbesondere bei einer Anordnung der Bremsscheibe an der Antriebswelle, die Abtriebswelle vollständig in dem Gehäuse aufgenommen sein, während sich die Antriebswelle aus dem Gehäuse heraus erstrecken kann, um die Bremsscheibe außerhalb des Gehäuses mit der Antriebswelle verbinden zu können.

Ein Innenraum des Gehäuses kann bei einigen Ausführungsformen ferner einen gemeinsamen Ölraum für die Antriebswelle und die Abtriebswelle definieren. Dieser gemeinsame Ölraum kann insbesondere die Abstrahlfläche vergrößern, über welche von der Antriebswelle infolge deren schneller Rotation erzeugte Abwärme abgeführt werden kann.

Ferner kann der Achsantrieb derart ausgebildet sein, dass der gemeinsame Ölraum mit einem Achsraum kommuniziert, in welchem ein mit dem Kegelrad kämmendes Tellerrad angeordnet ist. Insbesondere kann auch dadurch die genannte Abstrahlfläche erweitert werden und es kann eine Schmierung der Antriebswelle und der Abtriebswelle über einen Rädertrieb und einen Abstreifer in ein Reservoir erreicht werden, ohne dass hierzu eine Pumpe erforderlich wäre.

Bei einigen Ausführungsformen kann das Gehäuse einen integral einteilig ausgebildeten Lagerabschnitt aufweisen, an welchem Lager zur Lagerung der Antriebswelle und/oder der Abtriebswelle abgestützt sind, wobei das Gehäuse einen mit dem Lagerabschnitt verbundenen Achsraumgehäuseabschnitt aufweisen kann, in welchen das Kegelrad hineinragt und/oder in welchem ein mit dem Kegelrad kämmendes Tellerrad aufgenommen ist. Insbesondere kann es sich bei dem Tellerrad um das bereits genannte und in dem Achsraum angeordnete Tellerrad handeln.

An dem integral einteilig ausgebildeten Lagerabschnitt können insbesondere Lager abgestützt sein, die bezüglich der Längsrichtung des Fahrzeugs beidseitig des Ausgangsabschnitts der Antriebswelle und/oder beidseitig des Eingangsabschnitts der Abtriebswelle vorgesehen sind. Indem der Lagerabschnitt integral einteilig und als einzelnes stoffschlüssiges Teil ausgebildet sein kann, können die Lagerstellen exakt in Flucht zueinander ausgerichtet werden, um insbesondere die schnelldrehende Antriebswelle präzise parallel zu der Längsrichtung des Fahrzeugs ausrichten und lagern zu können. Die Lager können dabei insbesondere als Wälzlager ausgebildet sein. Der Achsraumgehäuseabschnitt kann ferner ein von dem Lagerabschnitt separates Bauteil bilden, welches beispielsweise durch Schrauben mit dem Lagerabschnitt verbunden sein kann und in welchem ein Tellerrad zur Übertragung der Antriebsleistung auf die Fahrzeugachse angeordnet sein kann.

Ferner können der Ausgangsabschnitt der Antriebswelle und der Eingangsabschnitt der Abtriebswelle innerhalb des Lagerabschnitts angeordnet sein. Die Übertragung der Antriebsleistung von der Antriebswelle auf die Abtriebswelle kann folglich innerhalb des Lagerabschnitts erfolgen. Insbesondere können die Antriebswelle und die Abtriebswelle dabei beidseitig des Ausgangsabschnitts der Antriebswelle bzw. des Eingangsabschnitts der Abtriebswelle bezüglich der Längsrichtung des Fahrzeugs über jeweilige Lager an dem Lagerabschnitt abgestützt sein.

Der Eingangsabschnitt der Antriebswelle kann innerhalb des Achsraumgehäuseabschnitts oder an diesem angeordnet sein. Der Achsraumgehäuseabschnitt kann dabei einen Anschluss für den Elektromotor bilden, so dass von dem Elektromotor generierte Antriebsleistung auf den innerhalb des oder an dem Achsraumgehäuseabschnitt angeordneten Eingangsabschnitt der Antriebswelle übertragen werden kann. Insbesondere kann auch der Achsraumgehäuseabschnitt zumindest ein Lager zum Lagern der Antriebswelle abstützen, um deren Eingangsabschnitt zu einem an dem Achsraumgehäuseabschnitt angeschlossenen Elektromotor auszurichten.

Ferner kann die Antriebswelle den Achsraumgehäuseabschnitt durchqueren. Insbesondere kann der Achsraumgehäuseabschnitt somit einen Anschlussabschnitt zum Befestigen des Elektromotors aufweisen, wobei sich der Eingangsabschnitt der Antriebswelle innerhalb des Achsraumgehäuseabschnitts oder an dem Achsraumgehäuseabschnitt befinden kann, um die von dem Elektromotor generierte Antriebsleistung zu empfangen. Der Elektromotor kann dabei koaxial zu der Antriebswelle angeordnet und ein Abtrieb des Elektromotors kann unmittelbar mit dem Eingangsabschnitt der Antriebswelle verbunden sein. Die Antriebswelle kann den Achsraumgehäuseabschnitt durchqueren und beispielsweise die Fahrzeugachse überqueren, um an der zweiten Seite des Achsantriebs Antriebsleistung über den Ausgangsabschnitt auf den Eingangsabschnitt der Abtriebswelle zu übertragen. Der Ausgangsabschnitt der Eingangswelle und der Eingangsabschnitt der Abtriebswelle können in dem bereits genannten Lagerabschnitt angeordnet sein, innerhalb dessen folglich die Übertragung von Antriebsleistung auf die Abtriebswelle erfolgen kann.

Bei einigen Ausführungsformen kann zumindest ein Lager zum Lagern der Antriebswelle an dem Achsraumgehäuseabschnitt abgestützt sein. Insbesondere kann dies eine exakte Ausrichtung zu einem an dem Achsraumgehäuseabschnitt befestigten Elektromotor ermöglichen.

Bei einigen Ausführungsformen kann das Gehäuse einen Anschlussabschnitt zum Befestigen des Elektromotors aufweisen. Insbesondere kann dieser Anschlussabschnitt an dem Achsraumgehäuseabschnitt vorgesehen sein. Über diesen Anschlussabschnitt kann der Elektromotor somit unmittelbar an der ersten Seite des Achsantriebs montiert werden, um Antriebsleistung auf den Eingangsabschnitt der Antriebswelle zu übertragen.

Bei einigen Ausführungsformen kann der Achsantrieb ferner ein Differential zum Verteilen zumindest eines jeweiligen Teils der Antriebsleistung auf zwei Halbwellen der Fahrzeugachse umfassen, wobei das Tellerrad drehfest mit dem Differential gekoppelt sein kann. Das Differential kann insbesondere als Kegeldifferential ausgebildet sein, wobei das Tellerrad drehfest mit einem Differentialkorb des Differentials verbunden und insbesondere einteilig mit dem Differentialkorb ausgebildet sein kann. Durch ein solches Differential kann die Antriebsleistung bedarfsgerecht auf die beiden Halbwellen der Fahrzeugachse übertragen werden, um beispielsweise ein schnelleres Drehen eines mit einer der Halbwellen verbundenen und während des Durchfahrens einer Kurve außenliegenden Rades zu ermöglichen.

Bei einigen Ausführungsformen kann die Bremsscheibe außerhalb des Gehäuses angeordnet sein. Die Bremsscheibe kann folglich im Trockenen umlaufen und die Bremse somit als trockene und verschleißarme Bremse ausgeführt sein, wobei durch eine solche trockene Bremse auch höhere Wirkungsgrade, insbesondere im Vergleich zu nasslaufenden Lamellenfeststellbremsen, erreicht werden können. Ferner kann die Bremsscheibe außerhalb des Gehäuses mit der Antriebswelle oder der Abtriebswelle verbunden bzw. verbindbar sein, so dass beispielsweise Wartungsarbeiten erfolgen können, ohne das Gehäuse öffnen oder auseinanderbauen zu müssen. Auch ein Austausch einer verschlissenen Bremsscheibe kann erfolgen, ohne das Gehäuse öffnen zu müssen. Entsprechend kann diejenige der Antriebswelle und der Abtriebswelle, an welcher die Bremsscheibe angeordnet ist, aus dem Gehäuse herausragen. Die Bremsscheibe kann insbesondere direkt oder über eine Halterung mit der Antriebswelle oder der Abtriebswelle verbunden sein.

Die Bremse kann bei einigen Ausführungsformen einen Bremssattel umfassen, der an einer Außenseite des Gehäuses befestigt ist. Auch der Bremssattel kann somit von außerhalb des Gehäuses zugänglich sein, um die Bremse warten zu können. Insbesondere kann der Achsantrieb dabei dazu ausgebildet sein, derart montiert zu werden, dass der Bremssattel vertikal oberhalb der Bremsscheibe angeordnet ist. Dies kann es ermöglichen, die Bremsscheibe von unterhalb des Fahrzeugs von einer jeweiligen der Antriebswelle oder der Abtriebswelle zu entnehmen und beispielsweise eine verschlissene Bremsscheibe auszutauschen. Insbesondere kann die Bremse eine einzige Bremsscheibe umfassen, welche von dem Bremssattel umgriffen ist. Dies kann eine einfache und platzsparende Ausbildung der Bremse ermöglichen.

Bei einigen Ausführungsformen kann der Bremssattel an dem Gehäuse schwimmend gelagert sein. Insbesondere wärmebedingte Ausdehnungen der Bremsscheibe während des Betriebs können somit tolerierbar sein und ein ungewünschtes Blockieren oder Reiben der Bremsscheibe während des Betriebs kann verhindert werden.

Ferner kann der Achsantrieb ein Tellerrad umfassen, welches mit dem Kegelrad kämmt. Dabei kann der Achsantrieb zumindest eine Halbwelle der Fahrzeugachse umfassen, wobei das Tellerrad drehfest mit der Halbwelle gekoppelt sein kann. Hierbei kann die Antriebsleistung über das Kegelrad und das Tellerrad folglich direkt auf die betreffende Halbwelle der Fahrzeugachse übertragen werden, wobei insbesondere ein zweiter Achsantrieb zum Antreiben einer zweiten Halbwelle der Fahrzeugachse vorgesehen sein kann. Auch dabei können beispielsweise unterschiedliche Drehzahlen auf die Räder während eines Durchfahrens einer Kurve übertragen werden, indem die jeweiligen Elektromotoren der Achsantriebe bedarfsgerecht angesteuert werden.

Die Erfindung wird im Folgenden rein beispielhaft anhand von Ausführungsformen unter Bezugnahme auf die Zeichnungen erläutert.

Es zeigen:
- Fig. 1: eine Darstellung eines Achsantriebs zum Antreiben einer Fahrzeugachse, welcher eine Bremse umfasst,
- Fig. 2A und 2B: eine jeweilige schematische Darstellung einer Ausführungsform des Achsantriebs sowie dessen Verbindung mit der Fahrzeugachse,
- Fig. 3A und 3B: eine jeweilige schematische Darstellung einer weiteren Ausführungsform des Achsantriebs sowie dessen Verbindung mit der Fahrzeugachse, und
- Fig. 4A und 4B: eine jeweilige schematische Darstellung einer weiteren Ausführungsform des Achsantriebs sowie dessen Verbindung mit der Fahrzeugachse.

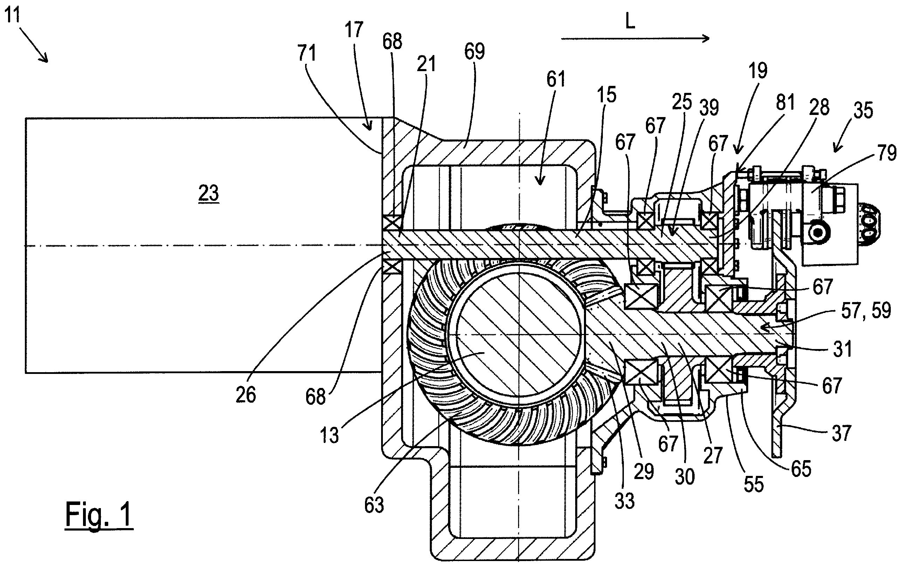

Fig. 1 zeigt einen Achsantrieb 11 zum Antreiben einer Fahrzeugachse 13 eines Fahrzeuges. Der Achsantrieb 11 weist dabei eine sich entlang einer Längsrichtung L des Fahrzeugs, welche quer und insbesondere senkrecht zu der Fahrzeugachse 13 ausgerichtet ist, erstreckende Antriebswelle 15 auf, die sich ausgehend von einer ersten Seite 17 des Achsantriebs 11 über die Fahrzeugachse 13 hinweg zu einer zweiten Seite 19 des Achsantriebs 11 erstreckt.

Die Antriebswelle 15 ist dazu ausgebildet, an einem Eingangsabschnitt 21 Antriebsleistung von einem auf der ersten Seite 17 des Achsantriebs 11 angeordneten Elektromotor 23 zu empfangen. Der Elektromotor 23 ist dabei koaxial zu der Antriebswelle 15 angeordnet und die Antriebswelle 15 bzw. deren Eingangsabschnitt 21 kann insbesondere unmittelbar mit einem nicht sichtbaren Abtrieb des Elektromotors 23 verbunden sein. Folglich kann der Eingangsabschnitt 21 der Antriebswelle 15 im Betrieb mit der Drehzahl des Abtriebs des Elektromotors 23 rotieren.

Die Antriebswelle 15 erstreckt sich von der ersten Seite 17 des Achsantriebs 11 bzw. einem ersten Ende 26 der Antriebswelle 15 zu der zweiten Seite 19 des Achsantriebs 11 und einem zweiten Ende 28 der Antriebswelle 15. An dem zweiten Ende 28 weist die Antriebswelle 15 einen Ausgangsabschnitt 25 auf, um empfangene Antriebsleistung an der zweiten Seite 19 des Achsantriebs 11 auf einen Eingangsabschnitt 30 einer Abtriebswelle 27 zu übertragen. Die Abtriebswelle 27 ist dazu über eine Stirnradstufe 39 mit der Antriebswelle 15 verbunden und erstreckt sich parallel versetzt zu der Antriebswelle 15 entlang der Längsrichtung L.

Die Abtriebswelle 27 erstreckt sich dabei zwischen einem ersten Ende 29 und einem zweiten Ende 31, wobei an dem ersten Ende 29 ein Kegelrad 33 angeordnet ist, welches mit einem Tellerrad 63 kämmt, um Antriebsleistung auf die Fahrzeugachse 13 zu übertragen. Der Eingangsabschnitt 30 der Abtriebswelle 27 ist zwischen dem ersten Ende 29 und dem zweiten Ende 31 der Abtriebswelle 27 angeordnet, und die Stirnradstufe 39 zur Übertragung der Antriebsleistung auf den Eingangsabschnitt 30 der Abtriebswelle 27 ist derart ausgebildet, dass eine Drehzahl der Antriebswelle 15 untersetzt bzw. ins Langsame übersetzt auf die Abtriebswelle 27 übertragen wird. Insbesondere bei einem Einsatz von schnelldrehenden und kompakt bauenden Elektromotoren 23 kann durch diese Untersetzung erreicht werden, ausreichend große Drehmomente zum Antreiben schwer beladener Nutzfahrzeuge über das an dem ersten Ende 29 der Abtriebswelle 27 angeordnete Kegelrad 33 auf die Fahrzeugachse 13 übertragen zu können. Ferner ermöglicht es die Stirnradstufe 39 auf besonders einfache und kompakte Weise, Antriebsleistung von der Antriebswelle 15 auf die Abtriebswelle 27 ohne große Leistungsverluste zu übertragen.

An dem zweiten Ende 31 der Abtriebswelle 27 ist ferner eine Bremsscheibe 37 einer Bremse 35 angeordnet. Die Bremsscheibe 37 ist somit auf der zweiten Seite 19 des Achsantriebs 11 und dem Elektromotor 23 bezüglich der Längsrichtung L des Fahrzeugs entgegengesetzt angeordnet, wobei der Achsantrieb 11 derart ausgebildet ist, dass die Antriebswelle 15 die Fahrzeugachse 13 im montierten Zustand überquert. Ein Antriebsleistungsfluss durch den Achsantrieb 11 hindurch kehrt sich dabei an der Stirnradstufe 39 um, so dass ein Antriebsleistungsfluss von dem Eingangsabschnitt 30 der Abtriebswelle 27 zu dem Kegelrad 33 antiparallel zu einem Antriebsleistungsfluss von dem Eingangsabschnitt 21 der Antriebswelle 15 zu deren Ausgangsabschnitt 25 verläuft.

Die Bremse 35 fungiert dabei als Feststellbremse und ist dazu vorgesehen, durch einen Eingriff eines Bremssattels 79 in die Bremsscheibe 37 das Fahrzeug im Stillstand zuverlässig gegen ein Wegrollen zu sichern. Zusätzlich dient die Bremse 35 auch dazu, eine Notbremsfunktion bereitzustellen. Dazu kann der Bremssattel 79 während der Fahrt aktiv außer Eingriff mit der Bremsscheibe 37 gebracht werden, wobei er dazu ausgebildet ist, bei einem Ausfall oder einer Störung des dazu erforderlichen Drucks automatisch in Eingriff zu der Bremsscheibe 37 zu geraten und das Fahrzeug zu bremsen.

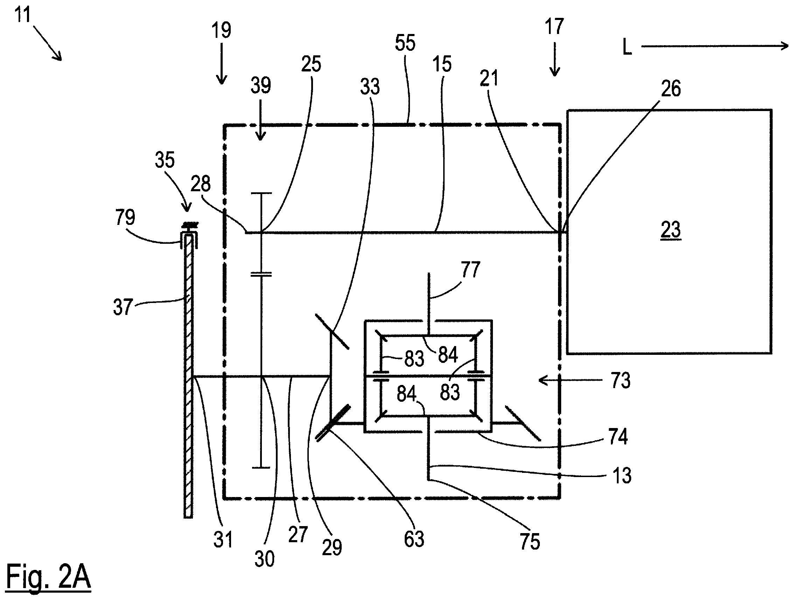

Indem der Antriebsleistungsfluss zunächst mittels der Antriebswelle 15 über die Fahrzeugachse 13 geleitet wird, können der Elektromotor 23 und die Bremsscheibe 37 auf verschiedenen Seiten der Fahrzeugachse 13 angeordnet werden. Die Komponenten des Achsantriebs 11 können somit auf die beiden Seiten der Fahrzeugachse 13 verteilt werden, ohne dass der Achsantrieb 11 eine große Menge an Bauraum auf einer Seite der Fahrzeugachse 13 beansprucht (vgl. auch Fig. 2A bis 4B). Beispielsweise kann die schmale Bremsscheibe 37 zwischen einer Vorderachse und einer Hinterachse des Fahrzeugs angeordnet werden, während der Elektromotor 23 vor der Vorderachse oder hinter der Hinterachse angeordnet werden kann und entsprechend keinen Bauraum zwischen den Fahrzeugachsen beansprucht.

Ferner rotiert die Bremsscheibe 37 aufgrund deren Anordnung an dem zweiten Ende 31 der Abtriebswelle 27 mit der gegenüber der Drehzahl der Antriebswelle 15 verlangsamten Rotation der Abtriebswelle 27. Schwingungen der Bremsscheibe 37 während des Betriebs des Achsantriebs 11 können dadurch minimiert werden, so dass störende Geräuschbildungen oder mögliche Beschädigungen des Achsantriebs 11 aufgrund solcher Schwingungen verhindert werden können.

Der Achsantrieb 11 umfasst ferner ein Gehäuse 55, innerhalb dessen insbesondere der Ausgangsabschnitt 25 der Antriebswelle 15 sowie der Eingangsabschnitt 30 der Abtriebswelle 27 angeordnet sind. Dabei weist das Gehäuse 55 einen integral einteilig ausgebildeten Lagerabschnitt 65 auf, an welchem Lager 67 abgestützt sind, die sowohl den Ausgangsabschnitt 25 der Antriebswelle 15 als auch den Eingangsabschnitt 30 der Abtriebswelle 27 beidseitig bezüglich der Längsrichtung L lagern. Indem der Lagerabschnitt 65 dabei als ein einzelnes stoffschlüssiges Teil ausgebildet ist, können die Lager 67 exakt in Flucht zueinander angeordnet werden, um sowohl die Antriebswelle 15 als auch die Abtriebswelle 27 präzise parallel zu der Längsrichtung L ausrichten zu können. Ferner bildet ein Innenraum 57 des Gehäuses 55 bzw. des Lagerabschnitts 65 einen gemeinsamen Ölraum 59 für die Antriebswelle 15 und die Abtriebswelle 27, so dass die Abstrahlfläche zum Abstrahlen von Abwärme, die insbesondere aufgrund der schnellen Rotation der Antriebswelle 15 entsteht, vergrößert werden kann.

Neben dem Lagerabschnitt 65 weist das Gehäuse 55 an der ersten Seite 17 des Achsantriebs 11 einen Achsraumgehäuseabschnitt 69 auf, welcher mit dem Lagerabschnitt 65 verbunden ist und in welchem ein mit dem Kegelrad 33 kämmendes Tellerrad 63 angeordnet ist. Der Achsraumgehäuseabschnitt 69 begrenzt dabei einen Achsraum 61, durch welchen die Fahrzeugachse 13 verläuft. Dieser Achsraum 61 kommuniziert mit dem von dem Innenraum 57 des Lagerabschnitts 65 gebildeten gemeinsamen Ölraum 59, so dass der Achsraum 61 einen weiteren Bereich zum Abstrahlen von infolge der Rotation der Antriebswelle 15 und der Abtriebswelle 27 erzeugter Abwärme zur Verfügung stellt.

Der Achsraumgehäuseabschnitt 69 weist ferner einen Anschlussabschnitt 71 zum Verbinden des Elektromotors 23 mit dem Gehäuse 55 auf, so dass der Elektromotor 23 präzise koaxial zu der Antriebswelle 15 ausgerichtet und mit dem Gehäuse 55 verbunden werden kann. Die Antriebswelle 15 ist dabei mit dem Eingangsabschnitt 21 an Lagern 68 gelagert, welche an dem Achsraumgehäuseabschnitt 69 abgestützt sind. Der Eingangsabschnitt 21 ist folglich in bzw. an dem Achsraumgehäuseabschnitt 69 angeordnet und die Antriebswelle 15 durchquert den Achsraumgehäuseabschnitt 69 bzw. den Achsraum 61, um die empfangene Antriebsleistung innerhalb des Lagerabschnitts 65 über den Ausgangsabschnitt 25 auf den Eingangsabschnitt 30 der Abtriebswelle 27 zu übertragen. Dabei überquert die Antriebswelle 15 die Fahrzeugachse 13.

Die Abtriebswelle 27 erstreckt sich mit dem zweiten Ende 31 aus dem Gehäuse 55 heraus, so dass die mit dem zweiten Ende 31 der Abtriebswelle 27 verbundene Bremsscheibe 37 außerhalb des Gehäuses 55 angeordnet ist. Die Bremse 35 kann damit als trockene Bremse ausgebildet sein und die Bremsscheibe 37 vollständig im Trockenen umlaufen. Auch der an einer Außenseite 81 mit dem Gehäuse 55 verbundene und dort schwimmend gelagerte Bremssattel 79 ist außerhalb des Gehäuses 55 angeordnet. Der Bremssattel 79 umgreift dabei die Bremsscheibe 37, um ein Fahrzeug im Stillstand durch Blockieren der Bremsscheibe 37 zuverlässig gegen ein Wegrollen sichern zu können.

Die Bremse 35 ist somit vollständig außerhalb des Gehäuses 55 angeordnet, wodurch beispielsweise Wartungsarbeiten an der Bremse 35 durchgeführt werden können, ohne das Gehäuse 55 öffnen oder auseinanderbauen zu müssen. Ferner kann beispielsweise eine verschlissene Bremsscheibe 37 problemlos gegen eine neue Bremsscheibe 37 ausgetauscht werden, wobei der Bremssattel 79 insbesondere vertikal oberhalb der Bremsscheibe 37 angeordnet ist, um die Bremsscheibe 37 von der Unterseite des Fahrzeugs aus entnehmen zu können. Grundsätzlich kann der Bremssattel 79 jedoch beliebig um die Bremsscheibe 37 herum angeordnet sein, wobei Positionen, die einen Ausbau der Bremsscheibe 37 nach bzw. von unten ermöglichen, Wartungs- und Reparaturarbeiten erleichtern können. Die Ausbildung der Bremse 37 mit einer trocken umlaufenden Bremsscheibe 37 ermöglicht es ferner, hohe und insbesondere im Vergleich zu nasslaufenden Lamellenfeststellbremsen höhere Wirkungsgrade zu erzielen.

Wie Fig. 1 ferner zeigt, erstreckt sich die Abtriebswelle 27 mit ihrem zweiten Ende 31 bezüglich der Längsrichtung L des Fahrzeugs über die Antriebswelle 15 hinaus, so dass sich die Bremsscheibe 37 radial bezüglich der Abtriebswelle 27 zumindest bis in Flucht zu der Antriebswelle 15 erstrecken kann. Der Radius der Bremsscheibe 37 kann durch dieses axiale Überragen der Antriebswelle 15 folglich größer als der Versatz zwischen der Antriebswelle 15 und der Abtriebswelle 27 sein, ohne dass die Bremsscheibe 37 durch die Antriebswelle 15 blockiert wird. Dadurch kann die Bremsscheibe 37 mit verhältnismäßig großem Radius ausgebildet sein, um möglichst große Bremskräfte zum sicheren Halten des Fahrzeugs im Stillstand mittels des Bremssattels 79 erzeugen zu können.

Fig. 2A zeigt eine schematische Darstellung des Achsantriebs 11 der Fig. 1, aus der sich ergibt, dass das Tellerrad 63 drehfest mit einem Differentialkorb 74 eines Differentials 73 verbunden sein kann. Das Differential 73 weist dabei mehrere Ausgleichsräder 83 und zwei Achswellenräder 84 auf, wobei die Achswellenräder 84 mit einer jeweiligen Halbwelle 75 bzw. 77 der Fahrzeugachse 13 verbunden sind. Durch die Kopplung des Tellerrads 63 mit dem Differential 73 kann die Antriebsleistung bedarfsgerecht auf die Halbwellen 75 und 77 der Fahrzeugachse 13 übertragen werden, um beispielsweise ein schnelleres Drehen eines an einer jeweiligen Halbwelle 75 oder 77 angeordneten Rades beim Durchfahren einer Kurve zu ermöglichen.

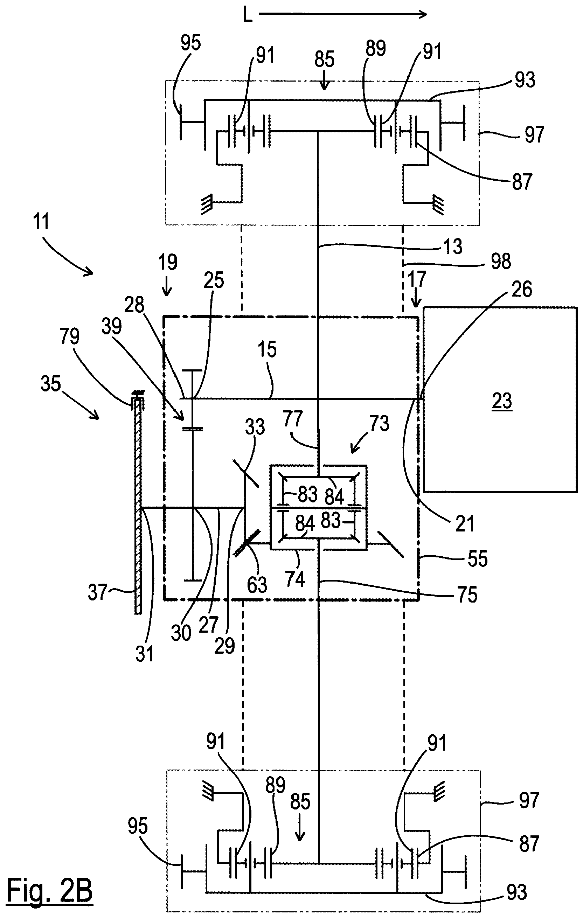

Wie Fig. 2B zeigt, kann der Achsantrieb 11 als kompakte Einheit mit einem Achsgehäuse 98 verbunden werden, innerhalb dessen sich die Fahrzeugachse 13 erstreckt. In den hier gezeigten Ausführungsformen ist die Fahrzeugachse 13 als Außenplanetenachse ausgebildet und weist an ihren Radseiten 97 ein jeweiliges Planetengetriebe 85 auf, mittels dessen eine Rotation der Fahrzeugachse 13 untersetzt bzw. ins Langsame übersetzt auf jeweilige Radnaben 95 übertragen werden kann. Auch durch eine solche Untersetzung kann erreicht werden, die erforderlichen Drehmomente bei der Verwendung eines schnelldrehenden Elektromotors 23 auf die Räder übertragen zu können.

Das Planetengetriebe 85 weist dabei ein Sonnenrad 89 auf, mit welchem die Fahrzeugachse 13 bzw. eine jeweilige Halbwelle 75 oder 77 der Fahrzeugachse 13 verbunden ist. Das Sonnenrad 89 ist von einem festgehaltenen und konzentrisch zu dem Sonnenrad 85 angeordneten Hohlrad 87 umgeben. Ferner weist das Planetengetriebe 85 mehrere Planetenräder 91 auf, die infolge einer Rotation des Sonnenrads 89 um auf einem Steg 93 gelagerte Achsen rotieren. Auch der Steg 93 wird dabei in Rotation versetzt und ist mit der Radnabe 95 verbunden, wobei der Steg 93 gegenüber dem mit der Fahrzeugachse 13 verbundenen Sonnenrad 89 verlangsamt rotiert, so dass die Drehzahl der Fahrzeugachse 13 verlangsamt auf die Radnabe 95 übertragen werden kann.

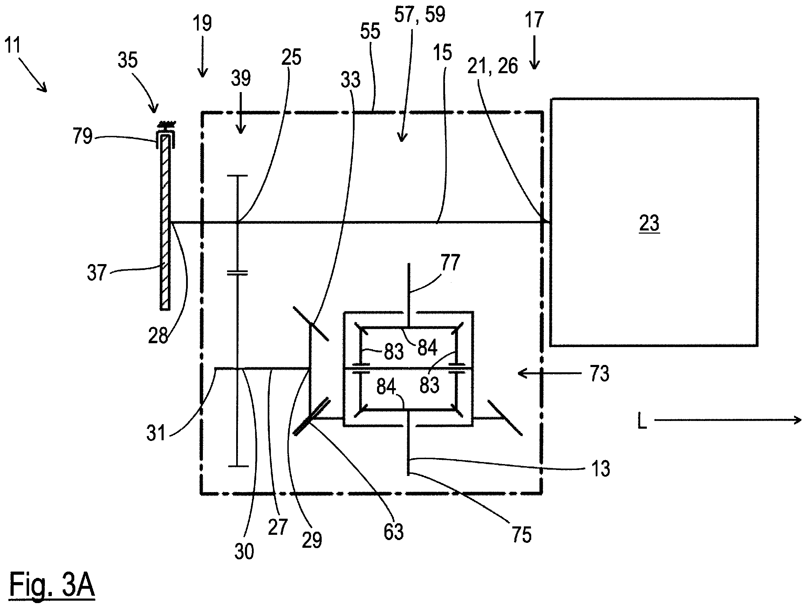

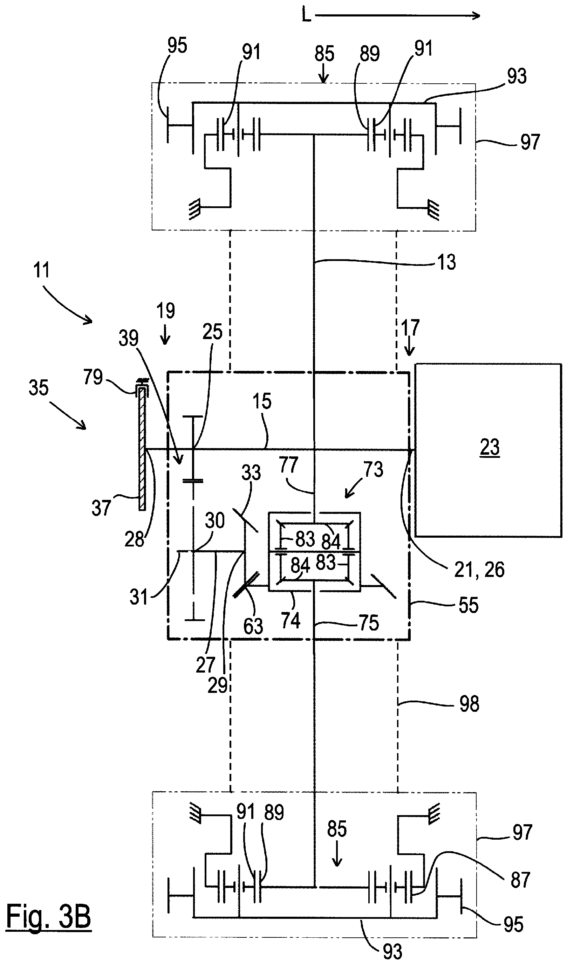

Die Fig. 3A und 3B zeigen schematisch eine weitere Ausführungsform des Achsantriebs 11. Auch hierbei ist eine sich entlang einer Längsrichtung L des Fahrzeugs erstreckende Antriebswelle 15 vorgesehen, welche an einem Eingangsabschnitt 21 Antriebsleistung von einem Elektromotor 23 empfängt und an einem Ausgangsabschnitt 25 über eine Stirnradstufe 39 auf einen Eingangsabschnitt 30 einer Abtriebswelle 27 überträgt. An einem ersten Ende der Abtriebswelle 27 ist wiederum ein Kegelrad 33 angeordnet, welches mit einem Tellerrad 63 kämmt, um die Antriebsleistung auf ein Differential 73 und über dieses auf jeweilige Halbwellen 75 und 77 der Fahrzeugachse 13 zu übertragen. Ferner weist auch dieser Achsantrieb 11 eine Bremse 35 mit einer Bremsscheibe 37 und einem Bremssattel 79 auf.

Im Unterschied zu der Ausführungsform der Fig. 1, 2A und 2B ist die Bremsscheibe 37 hierbei jedoch nicht an der Abtriebswelle 27 angeordnet, sondern die Antriebswelle 15 erstreckt sich ausgehend von einer ersten Seite 17 des Achsantriebs 11 bzw. einem ersten Ende 26 aus einem Gehäuse 55 heraus, und die Bremsscheibe 37 ist an einem zweiten Ende 28 der Antriebswelle 15 außerhalb des Gehäuses 55 angeordnet. Wiederum kann die Bremse 35 somit außerhalb des Gehäuses 55 angeordnet werden, um die Bremse 35 als trockene Bremse auszuführen und eine einfache Wartung der Bremse 35 zu ermöglichen. Ferner überragt die Antriebswelle 15 die Abtriebswelle 27 mit dem zweiten Ende 28, so dass die an dem zweiten Ende 28 angeordnete Bremsscheibe 37 mit einem größeren Radius als der Versatz zwischen der Antriebswelle 15 und der Abtriebswelle 27 ausgebildet sein kann. Auch hierbei kann der Achsantrieb 11 als kompakte Einheit mit einem Achsgehäuse 98 verbunden werden, wobei der Achsantrieb 11 wiederum derart ausgebildet sein kann, dass die Antriebswelle 15 die Fahrzeugachse 13 überquert (vgl. auch Fig. 3B).

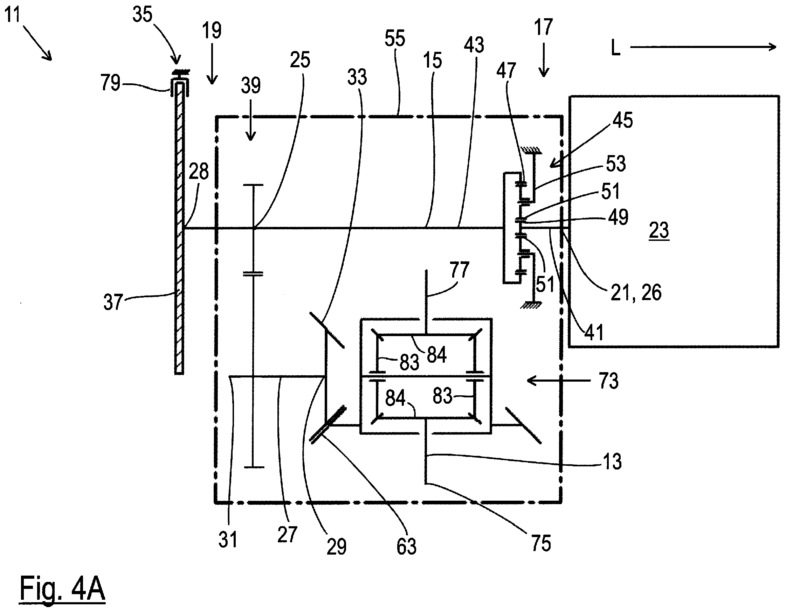

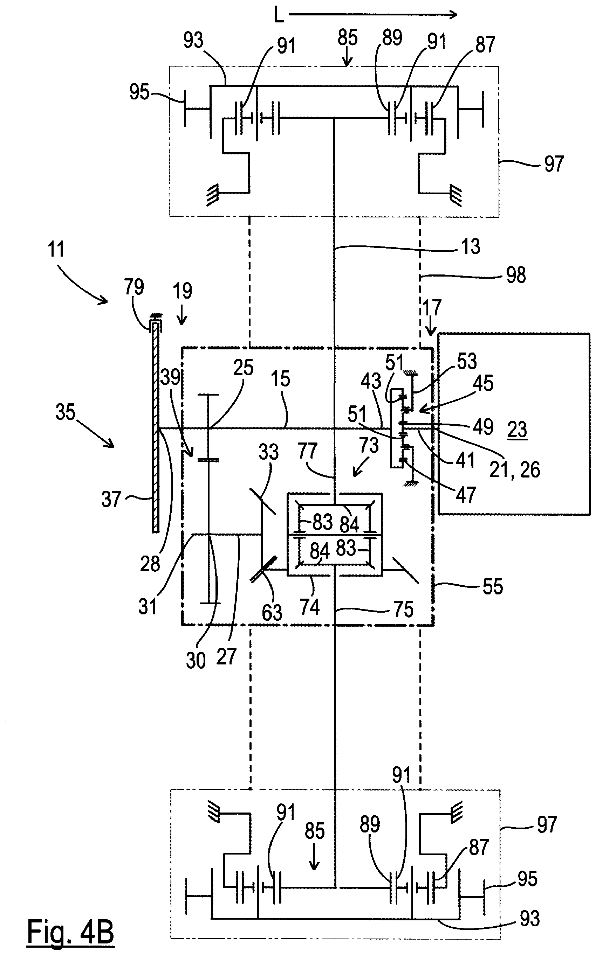

Wie ferner die Fig. 4A und 4B zeigen, kann die Antriebswelle 15 im Unterschied zu den weiteren gezeigten Ausführungsformen auch mehrteilig ausgebildet sein und eine erste Teilwelle 41 sowie eine zweite Teilwelle 43 aufweisen, welche über ein Untersetzungsgetriebe 45 miteinander verbunden sind. Die erste Teilwelle 41 kann dabei den Eingangsabschnitt 21 aufweisen, um Antriebsleistung von dem Elektromotor 23 zu empfangen, während die zweite Teilwelle 43 den Ausgangsabschnitt 25 aufweisen und Antriebsleistung auf die Abtriebswelle 27 bzw. deren Eingangsabschnitt 30 übertragen kann. Durch das Untersetzungsgetriebe 45 kann die Drehzahl der ersten Teilwelle 41 dabei untersetzt bzw. ins Langsame übersetzt auf die zweite Teilwelle 43 übertragen werden, um eine verbesserte Handhabung der durch einen kompakt bauenden und schnelldrehenden Elektromotor 23 generierten Drehzahlen erreichen zu können.

Das Untersetzungsgetriebe 45 ist dabei wie die oben beschriebenen Getriebe 85 der Radseiten 97 als Planetengetriebe ausgebildet, wobei die erste Teilwelle 41 drehfest mit einem Sonnenrad 49 gekoppelt ist. Auch das Untersetzungsgetriebe 45 weist mehrere Planetenräder 51 auf, welche um auf einem Steg 53 angeordnete Achsen rotieren. Hierbei ist jedoch der Steg 53 festgehalten, so dass ein konzentrisch zu dem Sonnenrad 49 angeordnetes Hohlrad 47 in Rotation versetzt werden kann, mit welchem die zweite Teilwelle 43 verbunden ist. Dabei rotieren das Hohlrad 47 und die zweite Teilwelle 43 verlangsamt gegenüber dem Sonnenrad 49 und der damit verbundenen ersten Teilwelle 41, so dass die Drehzahl der ersten Teilwelle 41 verlangsamt auf die zweite Teilwelle 43 übertragen werden kann.

Wiederum erstreckt sich die Antriebswelle 15 hin zu der zweiten Seite 19 des Achsantriebs 11 aus dem Gehäuse 55 heraus, und die Bremsscheibe 37 ist an dem zweiten Ende 28 der Antriebswelle 15 angeordnet. Indem die von dem Elektromotor 23 generierte Antriebsleistung zunächst auf die erste Teilwelle 41 und dann verlangsamt auf die zweite Teilwelle 43 übertragen wird, rotiert auch die Bremsscheibe 37 verlangsamt gegenüber dem schnell drehenden Elektromotor 23. Insbesondere können dadurch Schwingungen der Bremsscheibe 37 und eine ungewünschte Geräuschbildung oder Beschädigung des Achsantriebs 11 vermieden werden. Ferner kann durch die Untersetzung an dem Untersetzungsgetriebe 45 sowie eine weitere Untersetzung an der Stirnradstufe 39 ein ausreichend hohes Drehmoment auf die Fahrzeugachse 13 übertragen werden.

Wie Fig. 4B zeigt, kann auch ein solcher Achsantrieb 11 mit einem Achsraum 98 verbunden werden, um den Achsantrieb 11 zu montieren. Grundsätzlich kann es auch bei einer mehrteiligen Antriebswelle 15 mit zwei über ein Untersetzungsgetriebe 45 verbundenen Teilwellen 41 und 43 vorgesehen sein, die Bremsscheibe 37, wie in den Fig. 1, 2A und 2B gezeigt, an einem sich aus dem Gehäuse 55 heraus erstreckenden zweiten Enden 31 der Abtriebswelle 27 anzuordnen.

Die erfindungsgemäße Ausbildung eines Achsantriebs 11 ermöglicht folglich verschiedene Varianten, um auf kompakte Weise eine Bremse 35 mit Feststellbremsfunktion in einen Achsantrieb 11 zu integrieren und den Achsantrieb 11 mit einer Fahrzeugachse 13 zu verbinden. Der Achsantrieb 11 kann somit auch in Anbetracht des geringen im Bereich der Fahrzeugachse 13 zur Verfügung stehenden Bauraums problemlos genutzt werden, um einerseits Antriebsleistung auf die Fahrzeugachse 13 übertragen und andererseits eine zuverlässige Bremse 35 zum Festhalten des Fahrzeuges im Stillstand, beispielsweise eines Nutzfahrzeuges während eines Beladens, bereitstellen zu können.

### Bezugszeichenliste

- 11: Achsantrieb
- 13: Fahrzeugachse
- 15: Antriebswelle
- 17: erste Seite des Achsantriebs
- 19: zweite Seite des Achsantriebs
- 21: Eingangsabschnitt
- 23: Elektromotor
- 25: Ausgangsabschnitt
- 26: erstes Ende der Antriebswelle
- 27: Abtriebswelle
- 28: zweites Ende der Antriebswelle
- 29: erstes Ende der Abtriebswelle
- 30: Eingangsabschnitt der Abtriebswelle
- 31: zweites Ende der Abtriebswelle
- 33: Kegelrad
- 35: Bremse
- 37: Bremsscheibe
- 39: Stirnradstufe
- 41: erste Teilwelle der Antriebswelle
- 43: zweite Teilwelle der Antriebswelle
- 45: Untersetzungsgetriebe
- 47: Hohlrad
- 49: Sonnenrad
- 51: Planetenrad
- 53: Steg
- 55: Gehäuse
- 57: Innenraum des Gehäuses
- 59: gemeinsamer Ölraum
- 61: Achsraum
- 63: Tellerrad
- 65: Lagerabschnitt
- 67: Lager
- 69: Achsraumgehäuseabschnitt
- 71: Anschlussabschnitt
- 73: Differential
- 74: Differentialkorb
- 75: erste Halbwelle der Fahrzeugachse
- 77: zweite Halbwelle der Fahrzeugachse
- 79: Bremssattel
- 81: Außenseite des Gehäuses
- 83: Ausgleichsrad
- 84: Achswellenrad
- 85: Planetengetriebe
- 87: Hohlrad
- 89: Sonnenrad
- 91: Planetenrad
- 93: Steg
- 95: Radnabe
- 97: Radseite
- 98: Achsgehäuse

- L: Längsrichtung

## Patentansprüche

1. Achsantrieb (11) für ein Fahrzeug mit zumindest einer quer zu einer Längsrichtung (L) des Fahrzeugs ausgerichteten antreibbaren Fahrzeugachse (13),
umfassend
- eine Antriebswelle (15), die sich entlang der Längsrichtung (L) des Fahrzeugs ausgehend von einer ersten Seite (17) des Achsantriebs (11) über die Fahrzeugachse (13) hinweg zu einer zweiten Seite (19) des Achsantriebs (11) erstreckt, wobei die Antriebswelle (15) dazu ausgebildet ist, an einem Eingangsabschnitt (21) Antriebsleistung von einem auf der ersten Seite (17) des Achsantriebs (11) angeordneten Elektromotor (23) zu empfangen und die Antriebsleistung an der zweiten Seite (19) des Achsantriebs (11) über einen Ausgangsabschnitt (25) auszugeben; **gekennzeichnet durch**
- eine Abtriebswelle (27), die sich auf der zweiten Seite (19) des Achsantriebs (11) versetzt zu der Antriebswelle (15) parallel zu der Längsrichtung (L) des Fahrzeugs zwischen einem ersten Ende (29) und einem dazu entgegengesetzten zweiten Ende (31) erstreckt, wobei das erste Ende der Abtriebswelle (27) in Richtung der ersten Seite (17) des Achsantriebs (11) weist, und wobei die Abtriebswelle (27) dazu ausgebildet ist, an einem Eingangsabschnitt (30) Antriebsleistung von dem Ausgangsabschnitt (25) der Antriebswelle (15) zu empfangen und über ein an dem ersten Ende (29) angeordnetes Kegelrad (33) an die Fahrzeugachse (13) auszugeben; und
- eine Bremse (35), insbesondere Feststellbremse, mit einer Bremsscheibe (37), welche achsparallel zu der Längsrichtung (L) drehbar auf der zweiten Seite (19) des Achsantriebs (11) von der ersten Seite (17) des Achsantriebs (11) weg weisend an der Antriebswelle (15) oder an der Abtriebswelle (27) angeordnet ist.

2. Achsantrieb (11) nach Anspruch 1,
wobei der Ausgangsabschnitt (25) der Antriebswelle (15) und/oder der Eingangsabschnitt (30) der Abtriebswelle (27) bezüglich der Längsrichtung (L) zwischen dem ersten Ende (29) der Abtriebswelle (27) und der Bremsscheibe (37) angeordnet ist/sind.

3. Achsantrieb (11) nach Anspruch 1 oder 2,
wobei der Ausgangsabschnitt (25) der Antriebswelle (15) und der Eingangsabschnitt (30) der Abtriebswelle (27) derart antriebsmäßig miteinander gekoppelt sind, dass bei der Übertragung der Antriebsleistung von der Antriebswelle (15) auf die Abtriebswelle (27) eine Untersetzung erfolgt; und/oder
wobei der Ausgangsabschnitt (25) der Antriebswelle (15) und der Eingangsabschnitt (30) der Abtriebswelle (27) über zumindest eine Stirnradstufe (39) antriebsmäßig miteinander gekoppelt sind.

4. Achsantrieb (11) nach einem der vorhergehenden Ansprüche, wobei die Bremsscheibe (37) an dem zweiten Ende (31) der Abtriebswelle (27) angeordnet ist.

5. Achsantrieb (11) nach Anspruch 4,
wobei das zweite Ende der Abtriebswelle (27) bezüglich der Längsrichtung (L) des Fahrzeuges axial über die Antriebswelle (15) hinausragt, wobei die Bremsscheibe (37) sich radial zumindest bis in Flucht der Antriebswelle (15) erstreckt.

6. Achsantrieb (11) nach einem der Ansprüche 1 bis 3,
wobei sich die Antriebswelle (15) entlang der Längsrichtung (L) des Fahrzeugs zwischen einem ersten Ende (26) und einem dazu entgegengesetzten zweiten Ende (28) erstreckt, wobei das erste Ende (26) der Antriebswelle (15) in Richtung der ersten Seite (17) des Achsantriebs (11) weist, wobei die Bremsscheibe (37) an dem zweiten Ende (28) der Antriebswelle (15) angeordnet ist.

7. Achsantrieb (11) nach einem der vorhergehenden Ansprüche, wobei die Antriebwelle (15) zumindest eine erste Teilwelle (41) und eine dazu koaxiale zweite Teilwelle (43) umfasst, die über ein dazwischen angeordnetes Untersetzungsgetriebe (45) antriebswirksam gekoppelt sind.

8. Achsantrieb (11) nach einem der vorhergehenden Ansprüche, wobei der Achsantrieb (11) dazu ausgebildet ist, derart in dem Fahrzeug montiert zu werden, dass die Antriebswelle (15) vertikal versetzt zu der Abtriebswelle (27) angeordnet ist und die Fahrzeugachse (13) überquert.

9. Achsantrieb (11) nach einem der vorhergehenden Ansprüche, wobei der Achsantrieb (11) ein Gehäuse (55) umfasst, in dem die Antriebswelle (15) und die Abtriebswelle (27) aufgenommen sind, wobei der Ausgangsabschnitt (25) der Antriebswelle (15) und der Eingangsabschnitt (30) der Abtriebswelle (27) innerhalb des Gehäuses (55) angeordnet sind.

10. Achsantrieb (11) nach Anspruch 9,
wobei ein Innenraum (57) des Gehäuses (55) einen gemeinsamen Ölraum (59) für die Antriebswelle (15) und die Abtriebswelle (27) definiert; wobei der Achsantrieb (11) vorzugsweise derart ausgebildet ist, dass der gemeinsame Ölraum (59) mit einem Achsraum (61) kommuniziert, in welchem ein mit dem Kegelrad (33) kämmendes Tellerrad (63) angeordnet ist.

11. Achsantrieb (11) nach Anspruch 9 oder 10,
wobei das Gehäuse (55) einen integral einteilig ausgebildeten Lagerabschnitt (65) aufweist, an welchem Lager (67) zur Lagerung der Antriebswelle (15) und/oder der Abtriebswelle (27) abgestützt sind, und wobei das Gehäuse (55) einen mit dem Lagerabschnitt (65) verbundenen Achsraumgehäuseabschnitt (69) aufweist, in welchen das Kegelrad (33) hineinragt und/oder in welchem ein mit dem Kegelrad (33) kämmendes Tellerrad (63) aufgenommen ist.

12. Achsantrieb (11) nach Anspruch 11,
wobei der Ausgangsabschnitt (25) der Antriebswelle (15) und der Eingangsabschnitt (30) der Abtriebswelle (27) innerhalb des Lagerabschnitts (65) angeordnet sind;
und/oder
wobei der Eingangsabschnitt (21) der Antriebswelle (15) innerhalb des Achsraumgehäuseabschnitts (69) oder an diesem angeordnet ist; und/oder
wobei die Antriebswelle (15) den Achsraumgehäuseabschnitt (69) durchquert;
und/oder
wobei zumindest ein Lager (67) zum Lagern der Antriebswelle (15) an dem Achsraumgehäuseabschnitt (69) abgestützt ist;
und/oder
wobei das Gehäuse (55) einen Anschlussabschnitt (71) zum Befestigen des Elektromotors (23) aufweist.

13. Achsantrieb (11) nach einem der vorhergehenden Ansprüche, wobei der Achsantrieb (11) ferner den Elektromotor (23) umfasst; und/oder
wobei der Achsantrieb (11) ferner ein Differential (73) zum Verteilen zumindest eines jeweiligen Teils der Antriebsleistung auf zwei Halbwellen (75, 77) der Fahrzeugachse (13) umfasst, wobei das Tellerrad (63) drehfest mit dem Differential (73) gekoppelt ist.

14. Achsantrieb (11) nach einem der vorhergehenden Ansprüche, wobei die Bremsscheibe (37) außerhalb des Gehäuses (55) angeordnet ist.

15. Achsantrieb (11) nach einem der vorhergehenden Ansprüche,
wobei die Bremse (35) einen Bremssattel (79) umfasst, der an einer Außenseite (81) des Gehäuses (55) befestigt ist,
wobei der Bremssattel (79) an dem Gehäuse (55) vorzugsweise schwimmend gelagert ist.

## Claims

1. An axle drive (11) for a vehicle comprising at least one drivable vehicle axle (13) oriented transversely to a longitudinal direction (L) of the vehicle,
said axle drive (11) comprising
- a drive shaft (15) which extends along the longitudinal direction (L) of the vehicle, starting from a first side (17) of the axle drive (11), across the vehicle axle (13) to a second side (19) of the axle drive (11), wherein the drive shaft (15) is configured to receive drive power at an input section (21) from an electric motor (23) arranged at the first side (17) of the axle drive (11) and to output the drive power at the second side (19) of the axle drive (11) via an output section (25), **characterized by**
- a driven shaft (27) which extends at the second side (19) of the axle drive (11) offset from the drive shaft (15) and parallel to the longitudinal direction (L) of the vehicle between a first end (29) and a second end (31) opposite to the first end (29), wherein the first end of the driven shaft (27) faces towards the first side (17) of the axle drive (11), and wherein the driven shaft (27) is configured to receive drive power at an input section (30) from the output section (25) of the drive shaft (15) and to output said drive power to the vehicle axle (13) via a bevel gear (33) arranged at the first end (29); and
- a brake (35), in particular a parking brake, comprising a brake disk (37) which is rotatable around an axis parallel to the longitudinal direction (L) and which is arranged at the second side (19) of the axle drive (11), in a manner facing away from the first side (17) of the axle drive (11), at the drive shaft (15) or at the driven shaft (27).

2. An axle drive (11) in accordance with claim 1,
wherein the output section (25) of the drive shaft (15) and/or the input section (30) of the driven shaft (27) is/are arranged between the first end (29) of the driven shaft (27) and the brake disk (37) with respect to the longitudinal direction (L).

3. An axle drive (11) in accordance with claim 1 or claim 2,
wherein the output section (25) of the drive shaft (15) and the input section (30) of the driven shaft (27) are coupled drive-wise to one another such that a speed reduction takes place on the transmission of the drive power from the drive shaft (15) to the driven shaft (27);
and/or
wherein the output section (25) of the drive shaft (15) and the input section (30) of the driven shaft (27) are coupled drive-wise to one another via at least one spur gear set (39).

4. An axle drive (11) in accordance with any one of the preceding claims, wherein the brake disk (37) is arranged at the second end (31) of the driven shaft (27).

5. An axle drive (11) in accordance with claim 4,
wherein the second end of the driven shaft (27) projects axially beyond the drive shaft (15) with respect to the longitudinal direction (L) of the vehicle,
wherein the brake disk (37) extends radially at least up to an alignment with the drive shaft (15).

6. An axle drive (11) in accordance with any one of the claims 1 to 3,
wherein the drive shaft (15) extends along the longitudinal direction (L) of the vehicle between a first end (26) and a second end (28) which is opposite to the first end (26), wherein the first end (26) of the drive shaft (15) faces towards the first side (17) of the axle drive (11), wherein the brake disk (37) is arranged at the second end (28) of the drive shaft (15).

7. An axle drive (11) in accordance with any one of the preceding claims, wherein the drive shaft (15) comprises at least a first part shaft (41) and a second part shaft (43), which is coaxial to the first part shaft (41), which are drive-effectively coupled via a reduction gear unit (45) arranged between them.

8. An axle drive (11) in accordance with any one of the preceding claims, wherein the axle drive (11) is configured to be installed in the vehicle such that the drive shaft (15) is arranged vertically offset from the driven shaft (27) and crosses the vehicle axle (13).

9. An axle drive (11) in accordance with any one of the preceding claims, wherein the axle drive (11) comprises a housing (55) in which the drive shaft (15) and the driven shaft (27) are received, wherein the output section (25) of the drive shaft (15) and the input section (30) of the driven shaft (27) are arranged within the housing (55).

10. An axle drive (11) in accordance with claim 9,
wherein an inner space (57) of the housing (55) defines a common oil chamber (59) for the drive shaft (15) and the driven shaft (27);
wherein the axle drive (11) is preferably configured such that the common oil chamber (59) communicates with an axle chamber (61) in which a ring gear (63) meshing with the bevel gear (33) is arranged.

11. An axle drive (11) in accordance with claim 9 or claim 10,
wherein the housing (55) has a bearing section (65) which is integrally formed in one part and at which bearings (67) for supporting the drive shaft (15) and/or the driven shaft (27) are supported, and wherein the housing (55) has an axle chamber housing section (69) which is connected to the bearing section (65), into which the bevel gear (33) projects, and/or in which a ring gear (63) meshing with the bevel gear (33) is received.

12. An axle drive (11) in accordance with claim 11,
wherein the output section (25) of the drive shaft (15) and the input section (30) of the driven shaft (27) are arranged within the bearing section (65); and/or
wherein the input section (21) of the drive shaft (15) is arranged within the axle chamber housing section (69) or is arranged at the axle chamber housing section (69);
and/or
wherein the drive shaft (15) passes through the axle chamber housing section (69);
and/or
wherein at least one bearing (67) for supporting the drive shaft (15) is supported at the axle chamber housing section (69);
and/or
wherein the housing (55) has a connection section (71) for fastening the electric motor (23).

13. An axle drive (11) in accordance with any one of the preceding claims,
wherein the axle drive (11) further comprises the electric motor (23); and/or
wherein the axle drive (11) further comprises a differential (73) for distributing at least a respective portion of the drive power to two half-shafts (75, 77) of the vehicle axle (13), wherein the ring gear (63) is rotationally fixedly coupled to the differential (73).

14. An axle drive (11) in accordance with any one of the preceding claims, wherein the brake disk (37) is arranged outside the housing (55).

15. An axle drive (11) in accordance with any one of the preceding claims,
wherein the brake (35) comprises a brake caliper (79) which is fastened to an outer side (81) of the housing (55),
wherein the brake caliper (79) is preferably floatingly supported at the housing (55).

## Revendications

1. Entraînement d'essieu (11) pour un véhicule comprenant au moins un essieu de véhicule (13) pouvant être entraîné, orienté transversalement à une direction longitudinale (L) du véhicule,
comprenant
- un arbre menant (15) qui s'étend le long de la direction longitudinale (L) du véhicule depuis un premier côté (17) de l'entraînement d'essieu (11) au-delà de l'essieu de véhicule (13) jusqu'à un deuxième côté (19) de l'entraînement d'essieu (11), l'arbre menant (15) étant réalisé pour recevoir, au niveau d'un tronçon d'entrée (21), la puissance d'entraînement provenant d'un moteur électrique (23) disposé sur le premier côté (17) de l'entraînement d'essieu (11), et pour délivrer la puissance d'entraînement sur le deuxième côté (19) de l'entraînement d'essieu (11) par l'intermédiaire d'un tronçon de sortie (25) ;
**caractérisé par**
- un arbre mené (27) qui s'étend sur le deuxième côté (19) de l'entraînement d'essieu (11) en étant décalé par rapport à l'arbre menant (15), parallèlement à la direction longitudinale (L) du véhicule, entre une première extrémité (29) et une deuxième extrémité (31) opposée à celle-ci, la première extrémité de l'arbre mené (27) étant dirigée vers le premier côté (17) de l'entraînement d'essieu (11), et l'arbre mené (27) étant réalisé pour recevoir, au niveau d'un tronçon d'entrée (30), une puissance d'entraînement provenant du tronçon de sortie (25) de l'arbre menant (15) et pour la délivrer à l'essieu de véhicule (13) par l'intermédiaire d'une roue conique (33) disposée à la première extrémité (29) ; et
- un frein (35), en particulier un frein de stationnement, comprenant un disque de frein (37) disposé sur l'arbre menant (15) ou sur l'arbre mené (27) de manière à pouvoir tourner à axe parallèle à la direction longitudinale (L), sur le deuxième côté (19) de l'entraînement d'essieu (11), en étant détourné du premier côté (17) de l'entraînement d'essieu (11).

2. Entraînement d'essieu (11) selon la revendication 1,
dans lequel le tronçon de sortie (25) de l'arbre menant (15) et/ou le tronçon d'entrée (30) de l'arbre mené (27) est/sont disposé(s) entre la première extrémité (29) de l'arbre mené (27) et le disque de frein (37) par rapport à la direction longitudinale (L).

3. Entraînement d'essieu (11) selon la revendication 1 ou 2,
dans lequel le tronçon de sortie (25) de l'arbre menant (15) et le tronçon d'entrée (30) de l'arbre mené (27) sont couplés l'un à l'autre en termes d'entraînement de telle sorte que, lors de la transmission de la puissance d'entraînement de l'arbre menant (15) à l'arbre mené (27), il se produit une démultiplication ; et/ou
le tronçon de sortie (25) de l'arbre menant (15) et le tronçon d'entrée (30) de l'arbre mené (27) sont couplés l'un à l'autre en termes d'entraînement par au moins un étage d'engrenage droit (39).

4. Entraînement d'essieu (11) selon l'une des revendications précédentes, dans lequel le disque de frein (37) est disposé à la deuxième extrémité (31) de l'arbre mené (27).

5. Entraînement d'essieu (11) selon la revendication 4,
dans lequel la deuxième extrémité de l'arbre mené (27) fait saillie axialement au-delà de l'arbre menant (15) par rapport à la direction longitudinale (L) du véhicule, le disque de frein (37) s'étendant radialement au moins jusqu'en alignement de l'arbre menant (15).

6. Entraînement d'essieu (11) selon l'une des revendications 1 à 3,
dans lequel l'arbre menant (15) s'étend le long de la direction longitudinale (L) du véhicule entre une première extrémité (26) et une deuxième extrémité (28) opposée à celle-ci, la première extrémité (26) de l'arbre menant (15) étant dirigée vers le premier côté (17) de l'entraînement d'essieu (11), le disque de frein (37) étant disposé à la deuxième extrémité (28) de l'arbre menant (15).

7. Entraînement d'essieu (11) selon l'une des revendications précédentes, dans lequel l'arbre menant (15) comprend au moins un premier arbre partiel (41) et un deuxième arbre partiel (43) coaxial à celui-ci, qui sont couplés en termes d'entraînement par l'intermédiaire d'un démultiplicateur (45) disposé entre eux.

8. Entraînement d'essieu (11) selon l'une des revendications précédentes, dans lequel l'entraînement d'essieu (11) est réalisé pour être monté dans le véhicule de telle sorte que l'arbre menant (15) est décalé verticalement par rapport à l'arbre mené (27) et croise l'essieu de véhicule (13).

9. Entraînement d'essieu (11) selon l'une des revendications précédentes, dans lequel l'entraînement d'essieu (11) comprend un carter (55) dans lequel sont logés l'arbre menant (15) et l'arbre mené (27), le tronçon de sortie (25) de l'arbre menant (15) et le tronçon d'entrée (30) de l'arbre mené (27) étant disposés à l'intérieur du carter (55).

10. Entraînement d'essieu (11) selon la revendication 9,
dans lequel un espace intérieur (57) du carter (55) définit un espace à huile (59) commun à l'arbre menant (15) et à l'arbre mené (27) ; l'entraînement d'essieu (11) est de préférence réalisé de telle sorte que l'espace à huile commun (59) communique avec un espace d'essieu (61) dans lequel est disposée une couronne dentée (63) engrenant avec la roue conique (33).

11. Entraînement d'essieu (11) selon la revendication 9 ou 10,
dans lequel le carter (55) présente une portion de montage (65) réalisée intégralement, sur laquelle sont supportés des paliers (67) pour le montage de l'arbre menant (15) et/ou de l'arbre mené (27), et
le carter (55) présente une portion de carter à espace d'essieu (69) reliée à la portion de montage (65), dans laquelle pénètre la roue conique (33) et/ou dans laquelle est logée une couronne dentée (63) engrenant avec la roue conique (33).

12. Entraînement d'essieu (11) selon la revendication 11,
dans lequel le tronçon de sortie (25) de l'arbre menant (15) et le tronçon d'entrée (30) de l'arbre mené (27) sont disposés à l'intérieur de la portion de montage (65) ;
et/ou
le tronçon d'entrée (21) de l'arbre menant (15) est disposé à l'intérieur de la portion de carter à espace d'essieu (69) ou sur celle-ci ; et/ou l'arbre menant (15) traverse la portion de carter à espace d'essieu (69) ;
et/ou
au moins un palier (67) destiné à monter l'arbre menant (15) est supporté sur la portion de carter à espace d'essieu (69) ;
et/ou
le carter (55) présente une portion de raccordement (71) pour fixer le moteur électrique (23).

13. Entraînement d'essieu (11) selon l'une des revendications précédentes, dans lequel l'entraînement d'essieu (11) comprend en outre le moteur électrique (23) ; et/ou
l'entraînement d'essieu (11) comprend en outre un différentiel (73) pour répartir au moins une partie respective de la puissance d'entraînement sur deux demi-arbres (75, 77) de l'essieu de véhicule (13), la couronne dentée (63) étant couplée solidairement en rotation au différentiel (73).

14. Entraînement d'essieu (11) selon l'une des revendications précédentes, dans lequel le disque de frein (37) est disposé à l'extérieur du carter (55).

15. Entraînement d'essieu (11) selon l'une des revendications précédentes,
dans lequel le frein (35) comprend un étrier de frein (79) fixé sur un côté extérieur (81) du carter (55), et
l'étrier de frein (79) est monté de préférence de manière flottante sur le carter (55).
